# EUROPÄISCHE PATENTSCHRIFT

(11) **EP 3 592 653 B1**
(45) Veröffentlichungstag und Bekanntmachung des Hinweises auf die Patenterteilung: **23.08.2023**
(21) Anmeldenummer: 18712503.4
(22) Anmeldetag: 12.03.2018
(51) Int. Cl.: B65D 19/18, B29C 43/18

(54) **TRANSPORTEINRICHTUNG SOWIE VERFAHREN UND VORRICHTUNG ZUR HERSTELLUNG DER TRANSPORTEINRICHTUNG**
TRANSPORT APPARATUS AND METHOD AND DEVICE FOR PRODUCING THE TRANSPORT APPARATUS
DISPOSITIF DE TRANSPORT ET PROCÉDÉ ET DISPOSITIF DE FABRICATION DU DISPOSITIF DE TRANSPORT

(30) Priorität: 10.03.2017 DE 102017105173
(43) Veröffentlichungstag der Anmeldung: 15.01.2020
(73) Patentinhaber: KTP Kunststoff Palettentechnik GmbH, 66359 Bous (DE)
(72) Erfinder: PESCHECHONOW, Leonid, 66292 Riegelsberg (DE); WEILAND, Patrick, 66386 St. Ingbert (DE); HERBST, Marco, 66706 Nenning (DE); WINTRICH, Andreas, 66687 Wadern-Nunkirchen (DE)
(74) Vertreter: Patentanwälte Bernhardt / Wolff Partnerschaft mbB
(86) Internationale Anmeldenummer: PCT/DE2018/100222
(87) Internationale Veröffentlichungsnummer: WO 2018/162010

(56) Entgegenhaltungen:
- EP-A1- 1 985 546
- EP-A1- 2 965 998
- WO-A1-2013/122944
- DE-A1-102004 006 416
- DE-A1-102004 049 201
- GB-A- 1 352 429

## Beschreibung

Die Erfindung betrifft eine Transporteinrichtung, die eine Transportpalette umfasst, welche einen aus Kunststoff gebildeten Palettengrundkörper aufweist.

Die Erfindung betrifft ferner ein Verfahren sowie eine Vorrichtung zur Herstellung der Transporteinrichtung.

Solche Transporteinrichtungen sind aus der EP 2 256 050 B1 und EP 2 256 051 B1 der Anmelderin bekannt. Aus WO 2013 / 122944 A1 ist eine Kunststoffpalette bekannt, bei welcher ein Verstärkungsmittel mit dem Palettengrundkörper durch Verpressen des Kunststoffs reibschlüssig verbunden ist. Weitere Transporteinrichtungen sind in EP 1 985 546 A1, DE 10 2004 049201 A1, GB 1 352 429 A, EP 2 965 998 A1 und DE 10 2004 006416 A1 beschrieben.

Der Erfindung liegt die Aufgabe zugrunde, eine Transporteinrichtung der eingangs genannten Art zu schaffen, die eine größere mechanische Stabilität aufweist.

Erfindungsgemäß wird diese Aufgabe durch eine Transporteinrichtung nach Anspruch 1, ein Verfahren nach Anspruch 11 und eine Vorrichtung nach Anspruch 13 gelöst. H

Das Verstärkungsmittel ist an dem Palettengrundkörper derart angeordnet, dass es in seiner Längsrichtung von Material, das den Palettengrundkörper bildet und im Abstand von zumindest einem Ende des Verstärkungsmittels angeordnet ist, umgeben ist.

Durch das Verstärkungsmittel lässt sich vermeiden, dass sich die Transportpalette unter Last eines zu transportierenden Gutes verformt. Darüber hinaus kann durch die mechanisch verstärkende Wirkung des Verstärkungsmittels bei der Herstellung der Transportpalette Kunststoff, der ohne das Verstärkungsmittel zum Erreichen der notwendigen Stabilität verwendet werden müsste, eingespart werden. So eröffnet sich die Möglichkeit, Gewicht einzusparen. Bei ausreichender Verstärkung kann die Transportpalette z.B. lediglich an den Ecken ihres Bodens mit Standfüßen versehen werden und auf Standfüße, die üblicherweise im Bereich zwischen zwei benachbarten Ecken vorgesehen werden, verzichtet werden.

Zweckmäßigerweise ist das Verstärkungsmittel unlösbar mit dem Palettengrundkörper verbunden. Dazu wird das Verstärkungsmittel mit dem Palettengrundkörper reibschlüssig verbunden. In einer bevorzugten Ausführungsform der Erfindung weist der Palettengrundkörper dazu eine Form auf, die ein Herauslösen des Verstärkungsmittels aus dem Palettengrundkörper ausschließt.

In einer Ausgestaltung der Erfindung ist das Verstärkungsmittel aus einem Werkstoff gebildet, der ein größeres Elastizitätsmodul als der Kunststoff aufweist. Bevorzugt ist das Verstärkungsmittel aus einem metallischen Werkstoff, besonders bevorzugt aus Stahl, gebildet.

In einer Ausführungsform der Erfindung ist das Verstärkungsmittel ein gerader Strangkörper und vorzugsweise durch ein, vorzugsweise im Querschnitt rechteckiges, Rohr, eine Stange oder ein Strangprofil gebildet. Als besonders geeignet zur Bildung des Verstärkungsmittels hat sich Profilstahl erwiesen, z.B. in einer C-Profil-, T-Profil- oder Doppel-T-Profil-Form.

In einer besonders bevorzugten Ausgestaltung der Erfindung ist das Verstärkungsmittel zum Ausgleich unterschiedlicher Wärmeausdehnungen und/oder -schrumpfungen des Palettengrundkörpers und des Verstärkungsmittels derart in der Transportpalette angeordnet, dass sich der Palettengrundkörper und das Verstärkungsmittel bei einer Änderung der Größe der Transportpalette im Verhältnis zueinander bewegen können. Da der Kunststoff zur Herstellung des Palettengrundkörpers bei erhöhter Temperatur gepresst wird, kommt es nach dem Pressvorgang und der entsprechenden Abkühlung zu einem Schrumpf in einer Größenordnung von etwa 2 %. Da das Verstärkungsmittel seine Größe beim Abkühlen im Vergleich wesentlich weniger verändert, wird durch die Möglichkeit, dass sich das Verstärkungsmittel und der Palettengrundkörper im Verhältnis zueinander bewegen können, die Ausbildungen Spannungen in der Transportpalette vermieden. Es versteht sich, dass durch die erfindungsgemäße Anordnung darüber hinaus Spannungen vermieden werden können, die sich aufgrund einer Temperaturveränderung der fertigen Transportpalette, z.B. durch Umwelteinflüsse, ergeben können.

Zweckmäßigerweise ist das Verstärkungsmittel derart an dem Palettengrundkörper angeordnet, dass es sich im Verhältnis zu dem Palettengrundkörper lediglich in einer Raumrichtung, vorzugsweise lediglich in Längsrichtung des Verstärkungsmittels, bewegen kann. Wenn das Verstärkungsmittel wie oben erläutert ein gerader Strangkörper ist, wirken sich die Unterschiede der Längenänderungen in der Längsrichtung des Strangkörpers, vor allem beim Schrumpf nach dem Pressen, am stärksten aus. In den anderen Raumrichtungen hat die mit der Schrumpfung verbundene Längenänderung des Palettengrundkörpers, die im Vergleich zur jeweiligen Größenänderung ebenfalls größer ist, zur Folge, dass eine nachfolgend erläuterte Halterung des Palettengrundkörpers, mittels derer die Verbindung zwischen dem Palettengrundkörper und Verstärkungselement ausgebildet wird, auf das Verstärkungselement aufgeschrumpft wird und das Verstärkungselement unter Reibschluss festhält.

In einer Ausgestaltung der Erfindung ist der Palettengrundkörper derart geformt, dass er das Verstärkungsmittel zumindest abschnittsweise, vorzugsweise lediglich abschnittsweise, hält. Dazu kann der Palettengrundkörper zumindest eine Halterung aufweisen, die an dem Verstärkungsmittel angreift, um es am Palettengrundkörper zu halten. Zweckmäßigerweise umgreift die Halterung das Verstärkungsmittel. Hinsichtlich der mechanischen Stabilisierung hat es sich als vorteilhaft erwiesen, den Palettengrundkörper mit einer Vielzahl der Halterungen zu versehen und die Halterungen im Abstand voneinander auszubilden. Es hat sich als besonders vorteilhaft erwiesen, die Halterungen derart auszubilden, dass ein Raum zwischen benachbarten Halterunen frei von Material bleibt, damit Freiraum besteht, in dem die Halterungen aufeinander zu oder voneinander weg bewegen können. Durch die Anordnung der Halterungen im Abstand voneinander wird einerseits eine gute mechanische Verbindung zwischen dem Verstärkungsmittel und dem Palettengrundkörper erreicht, zum anderen entsteht aufgrund der verglichen mit einem vollständigen Einschluss kleineren Kontaktflächen zwischen dem Verstärkungsmittel und dem Palettengrundkörper weniger Reibung und es werden bei Bewegung des Verstärkungselements und des Palettengrundkörpers relativ zueinander Spannungen vermieden.

Zweckmäßigerweise ist der Palettengrundkörper derart gebildet, dass das Verstärkungsmittel mit einer seiner Längsseiten, vorzugsweise vollständig, an einem Boden des Palettengrundkörpers anliegt, vorzugsweise an einer Unterseite des Bodens der Standfüßen des Palettengrundkörpers zugewandt ist. Die zumindest eine Halterung ist vorzugsweise an dem Boden befestigt und greift vom Boden aus an dem Verstärkungselement an. In einer besonders bevorzugten Ausführungsform der Erfindung ist ein Raum zwischen den Halterungen abgesehen von dem Bereich, in dem das Verstärkungsmittel mit seiner Längsseite an dem Boden anliegt, frei von Material, um Raum für die Längenausdehnung zu geben.

In einer besonders bevorzugten Ausführungsform der Erfindung liegt zumindest ein Ende, vorzugsweise beide Enden, des Verstärkungsmittels am Palettengrundkörper zumindest in einer Richtung, in der sich das Verstärkungsmittel und der Palettengrundkörper relativ zueinander bewegen können, frei. Zweckmäßigerweise ist der Palettengrundkörper im Bereich des Endes des Verstärkungsmittels derart geformt, dass ein Freiraum gebildet ist, in dem sich das Ende des Verstärkungsmittels relativ zum Palettengrundkörper frei bewegen kann.

In einer Ausgestaltung der Erfindung ist das Verstärkungsmittel an dem Palettengrundkörper angeordnet derart, dass zumindest ein Ende, vorzugsweise beide Enden, des Verstärkungsmittels, innerhalb des Palettengrundkörpers angeordnet ist. Erfindungsgemäß ist das Verstärkungsmittel an dem Palettengrundkörper angeordnet derart, dass es in seiner Längsrichtung von Material, das den Palettengrundkörper bildet, umgeben ist.

Zweckmäßigerweise sind die Enden des Verstärkungsmittels, vorzugsweise in Längsrichtung des Verstärkungsmittels, im Abstand von einer seitlichen Außenwand des Palettengrundkörpers angeordnet, die vorzugsweise an einem äußeren Rand des Palettengrundkörpers angeordnet ist.

In einer weiteren Ausführungsform der Erfindung weist der Palettengrundkörper an einem Rand des Bodens eine entlang des Randes und vorzugsweise parallel zum Rand angeordnete Strebe auf, die vom Boden in Richtung der Seite des Bodens vorsteht, auf der das Verstärkungsmittel angeordnet ist. Zweckmäßigerweise ist das Ende des Verstärkungsmittels im Abstand von der Strebe, die entlang des gesamten Randes des Bodens gebildet sein kann und vorzugsweise die genannte Außenwand bildet, angeordnet.

In einer weiteren Ausgestaltung der Erfindung ist am Boden des Palettengrundkörpers zumindest eine Verstärkungsrippe vorgesehen, die von derselben Seite des Bodens vorsteht, an der das Verstärkungsmittel angeordnet ist. Zweckmäßigerweise ist das zumindest eine Ende des Verstärkungsmittels im Abstand von der Verstärkungsrippe angeordnet. Sind mehrere, ggf. parallel oder/und senkrecht zueinander angeordnete, Verstärkungsrippen vorgesehen, kann das Ende zwischen zwei Verstärkungsrippen, vorzugsweise zwischen zwei unmittelbar benachbarten Verstärkungsrippen, angeordnet sein.

Sind, wie nach einer besonders bevorzugten Ausgestaltung der Erfindung vorgesehen, zumindest zwei der Verstärkungsmittel an dem Palettengrundkörper gebildet, sind die Verstärkungsmittel zweckmäßigerweise im Abstand voneinander angeordnet, insbesondere derart, dass die jeweiligen Enden der Verstärkungsmittel im Abstand von einem anderen Verstärkungsmittel angeordnet sind. Dies gilt insbesondere, wenn die Verstärkungsmittel quer, insbesondere senkrecht, zueinander angeordnet sind.

Für die Herstellung der Transporteinrichtung ist erfindungsgemäß eine Vorrichtung vorgesehen, die eine Pressform zum Pressen von Kunststoff umfasst, welche zur gezielten Aufnahme des Verstärkungsmittels vorgesehen ist. Die Pressform weist zweckmäßigerweise zumindest einen Abschnitt zur Aufnahme eines Mittels zur Verstärkung der Transporteinrichtung auf, das beim Pressen mit dem Kunststoff zu verbinden ist.

In einer bevorzugten Ausgestaltung der Erfindung ist der Aufnahmeabschnitt durch eine in der Pressform vorgesehene, vorzugsweise nutenförmige, Aussparung gebildet, in die sich das Verstärkungsmittel einlegen lässt. Zweckmäßigerweise sind der Aufnahmeabschnitt und das Verstärkungsmittel in ihren Formen derart aneinander angepasst, dass sich das Verstärkungsmittel in dem Aufnahmeabschnitt in einer stabilen Position anordnen lässt. Dadurch wird vermieden, dass das Verstärkungsmittel während des Pressens des Kunststoffs aus einer Position, die in der Transportpalette für sie vorgesehen ist, bewegt wird.

Zur erfindungsgemäßen Herstellung der Transporteinrichtung wird zur Ausbildung der Transportpalette Kunststoff in eine Pressform, vorzugsweise in die obengenannte Pressform gegeben, und die Transportpalette durch Pressen des Kunststoffs geformt. Vor Eingabe des Kunststoffs wird in die Pressform ein Mittel zur Verstärkung der Transportpalette gegeben und der Kunststoff unter Ausbildung einer mechanischen, vorzugsweise reibschlüssigen, Verbindung mit dem Verstärkungsmittel zu der Transportpalette geformt.

In einer Ausgestaltung der Erfindung wird der Palettengrundkörper derart mit dem Verstärkungsmittel verbunden, dass er sich bei Größenveränderung aufgrund einer Temperaturänderung im Verhältnis zu dem Verstärkungsmittel bewegen kann.

Um die Möglichkeit zur Bewegung zu schaffen, wird der Palettengrundkörpervorzugsweise lediglich abschnittsweise mit dem Verstärkungsmittel verbunden.

Dazu sind am Boden und/oder der Wand der Aussparung zweckmäßigerweise Vorsprünge gebildet, die in ihrer Form derart an das Verstärkungsmittel angepasst sind, dass sie, wenn das Verstärkungsmittel in die Pressform eingelegt ist, an dem Verstärkungsmittel anliegen oder zumindest so nah an das Verstärkungsmittel heranreichen, dass auf dem Verstärkungsmittel beim Pressen lediglich ein derart dünner Kunststofffilm gebildet wird, dass er sich unter den Spannungen bei der genannten Größenänderung vom Palettengrundkörper lösen kann.

Erfindungsgemäß sind das Verstärkungsmittel und die Pressform derart aneinander angepasst, dass die Pressform zumindest an einem Ende, vorzugsweise an beiden Enden, des Verstärkungsmittels vollständig anliegt, sodass beim Pressen zumindest ein Ende des Verstärkungsmittels frei vom Kunststoff bleibt, oder zumindest so nahe anliegt, dass beim Pressen des Kunststoffs auf dem Ende lediglich eine dünner Kunststofffilm gebildet wird, der sich unter den Spannungen bei der genannten Größenänderung vom Palettengrundkörper lösen kann. Zweckmäßigerweise ist die Pressform ferner gebildet derart, dass in Längsrichtung der genannten Aussparung in Abstand von der Aussparung ein Raum zur Aufnahme von den Palettengrundkörper bildenden Material gebildet ist.

Die Transportpalette ist zweckmäßigerweise mit Standfüßen versehen, die von einer Unterseite eines Bodes der Transportpalette vorstehen. Es versteht sich, dass die Standfüße derart gebildet sind, dass mit einem Hubgerüst eines Gabelstaplers unter die Transportpalette gegriffen werden kann. In einer Ausführungsform der Erfindung sind die Standfüße ausschließlich an den vier Ecken der Transportpalette gebildet. Zweckmäßigerweise wird das Verstärkungsmittel auf der Unterseite des Palettengrundkörpers bzw. der Transportpalette angeordnet, von der die Standfüße vorstehen. Vorteilhaft lässt sich so die Oberseite des Palettengrundkörpers vollständig als ebene Fläche aus dem Kunststoff bilden.

In einer besonders bevorzugten Ausgestaltung der Erfindung bildet die Transporteinrichtung einen Behälter, insbesondere Mehrwegbehälter, der als Behälterboden die Transportpalette und Seitenwände, die sich auf derTransportpalette anordnen lassen, aufweist.

Die Seitenwände sind an ihren senkrechten Kanten zweckmäßigerweise verbunden und zusammenfaltbar, sodass sie sich um zusammengefalteten Zustand aufeinanderlegen lassen. Einzelne oder mehrere der Seitenwände können zum Zusammenfalten mit einer Faltlinie, die zu den senkrechten Behälterkanten parallel ist, versehen sein. Vorzugsweise ist der Behälter im aufgestellten Zustand quaderförmig und zumindest zwei gegenüberliegende der Seitenwände sind jeweils in ihrer Mitte mit der zu den senkrechten Behälterkanten parallelen Faltlinie versehen. Die Transporteinrichtung kann ferner einen auf die Seitenwände aufsetzbaren Deckel umfassen.

Die Erfindung wird nachfolgend anhand eines Ausführungsbeispiels und den beigefügten Zeichnungen, auf die sich das Ausführungsbeispiel bezieht, näher erläutert. Es zeigen:
- Fig. 1 und 2: eine erfindungsgemäße Transporteinrichtung in verschiedenen Ansichten und verschiedenen Positionen,
- Fig. 3: eine Transportpalette der Transporteinrichtung nach den Fig. 1 und 2 in verschiedenen Ansichten,
- Fig. 4: eine Vorrichtung zur Herstellung der Transportpalette nach Fig. 3 und

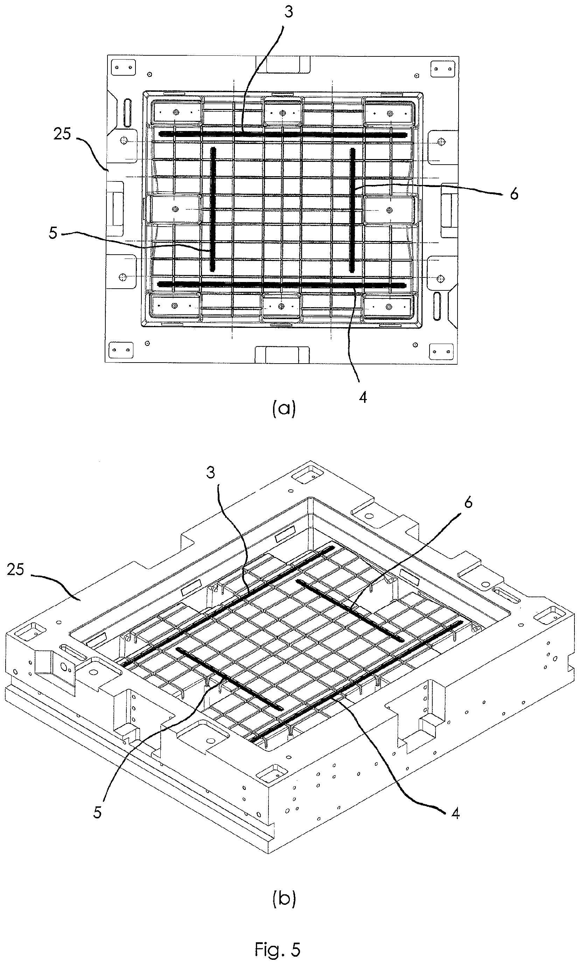

- Fig. 5: die Vorrichtung nach Fig. 4 bestückt mit Verstärkungsmitteln.

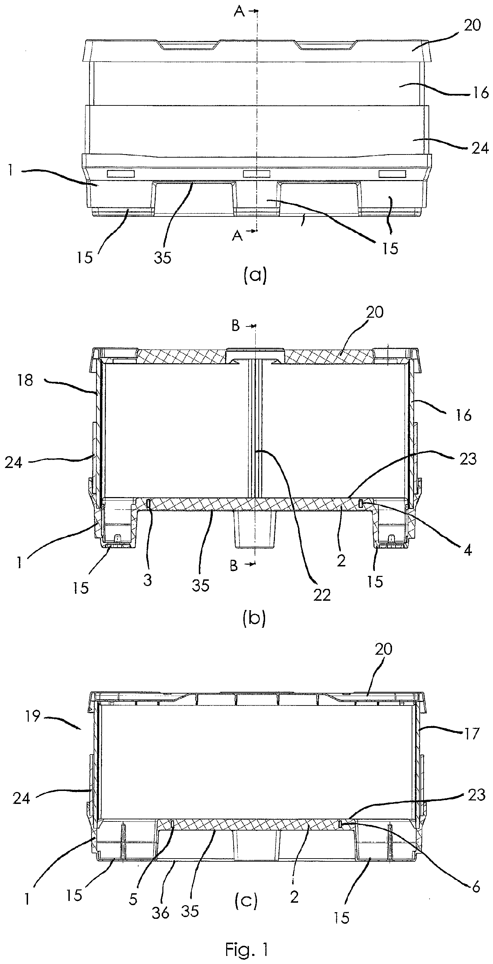

Fig. 1a zeigt eine Seitenansicht einer erfindungsgemäßen Transporteinrichtung, die eine Transportpalette 1 aufweist, auf der ein unterer Seitenwandteil 24 sowie obere Seitenwände 16,17,18,19 angeordnet sind. Zum Verschließen der Transporteinrichtung ist ein Deckel 20 vorgesehen, der sich auf die Seitenwände 16,17,18,19 aufsetzen lässt.

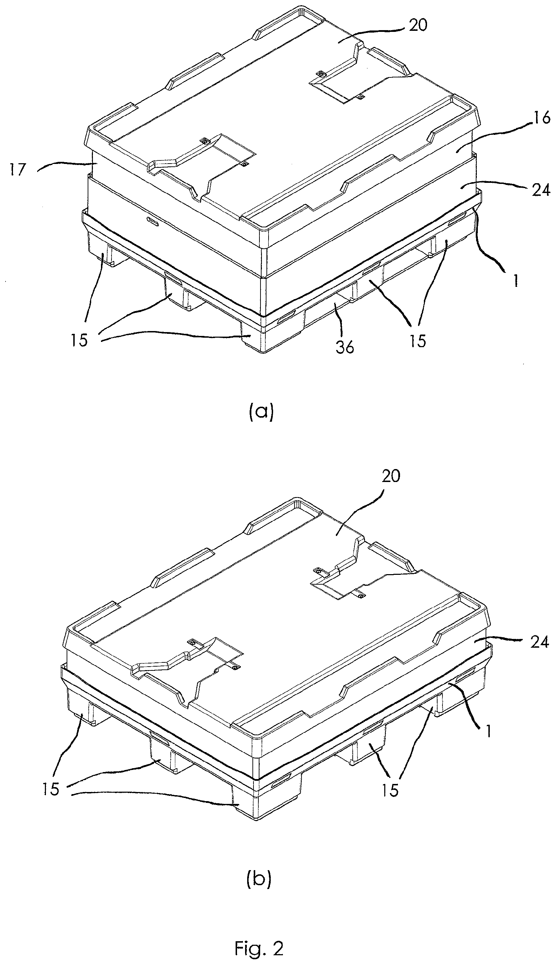

Wie insbesondere Fig. 1 und 2 zu entnehmen ist, weist die Transportpalette 1 an ihren Ecken und jeweils an der Mitte der jeweiligen Seiten Standfüße 15 auf, die von einer Unterseite 35 eines Bodens der Transportpalette 1 vorstehen. Zwischen den Standfüßen 15 sind Freiräume gebildet, die zum Eingriff mittels eines Hubgestänges eines Gabelstaplers vorgesehen sind. Unter den Standfüßen 15 können optional Platten 36 angeordnet sein, um eine größere Kontaktfläche zu einem Untergrund zu bilden. Die Platten 36 sind beispielhaft nur in einzelnen der beigefügten Zeichnungen dargestellt.

Die Seitenwände 16,17,18,19 sind an ihren Rändern über Faltlinien fest miteinander verbunden. Die gegenüberliegenden Seitenwände 17,19 sind jeweils an ihrer Mitte mit zu den senkrechten Behälterkanten parallelen Faltlinien 22 versehen (vgl. Fig. 1b), damit sich die Seitenwände 16,17,18,19 flach zusammenlegen lassen. Wenn mit dem Transportbehälter ein Gut transportiert wird, werden die Seitenwände 16,17,18,19, wie in Fig. 1 und in Fig. 2a gezeigt, aufgestellt. Damit der Transportbehälter, wenn er, beispielsweise beim Rücktransport, leer ist, weniger Volumen einnimmt, werden die Seitenwände 16,17,18,19 zusammengelegt und flach auf die Transportpalette 1 aufgelegt, wie dies in Fig. 2b gezeigt ist.

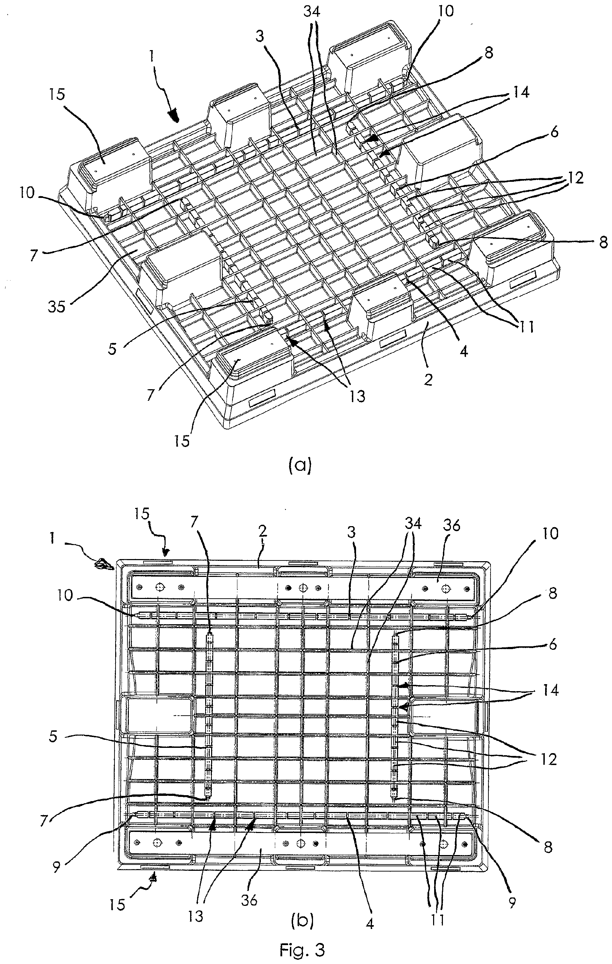

Die Transportpalette 1 umfasst einen Palettengrundkörper 2, der einteilig aus Kunststoff gebildet ist, und Verstärkungselemente 3,4,5,6, die aus Profilstahl, z.B. mit C-Profil-Form, oder einem Stahlrohr mit rechteckigem Querschnitt gebildet sind. Wie aus den Fig. 1b und c, die den Transportbehälter in verschiedenen senkrechten Schnitten A und B (wie in Fig. 1a und b gezeigt) darstellen, und aus Fig. 3a hervorgeht, sind die Verstärkungselemente 3,4,5,6 jeweils parallel zu den Seiten des Palettengrundkörpers 2 und zum Inneren der Transportpalette 1 hin versetzt zu den Standfüßen 15 angeordnet.

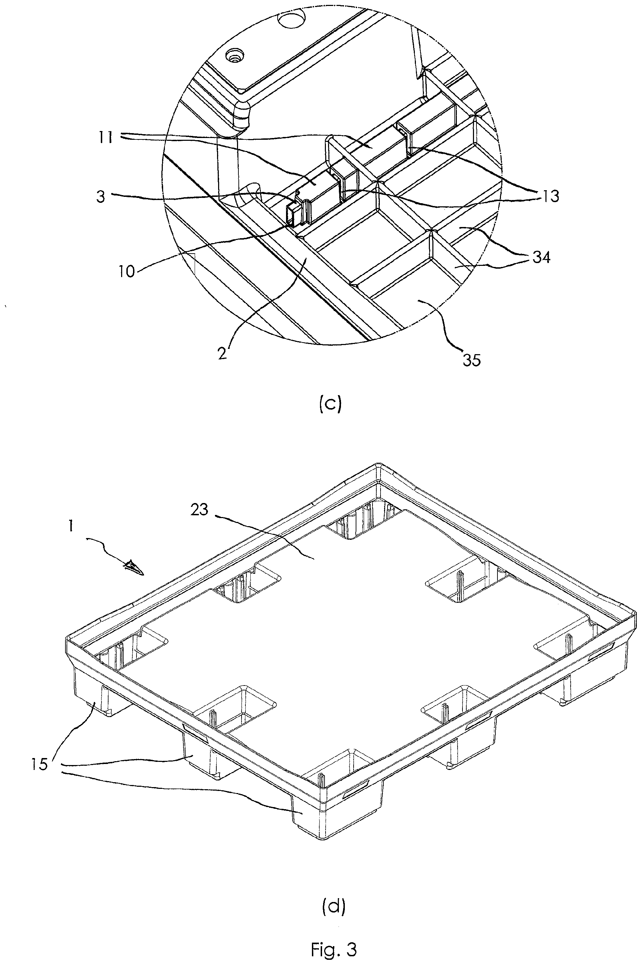

Wie Fig. 3 zu entnehmen ist, sind auf der Unterseite 35 des Bodens der Transportpalette 1 zu Versteifungen Rippen 34 gebildet, die von der Unterseite 35 senkrecht vorstehen. Die Verstärkungselemente 3,4,5,6 liegen mit einer Seite an der Unterseite 35 des Palettenbodens an und werden durch mehrere Halterungen 11,12 an der Unterseite 35 gehalten. Die Halterungen 11, 12 sind im Abstand voneinander angeordnet, so dass zwischen Ihnen Freiräume 13,14 gebildet sind, in denen die Verstärkungselemente 3,4,5,6 abgesehen von den jeweiligen, der Unterseite 35 zugewandten Seiten, vollständig frei liegen. Insbesondere Fig. 3c zeigt, sind auch Enden 7,8,9,10 der Verstärkungselemente 3,4,5,6 vollständig frei von dem Kunststoff, der den Palettengrundkörper 2 bildet.

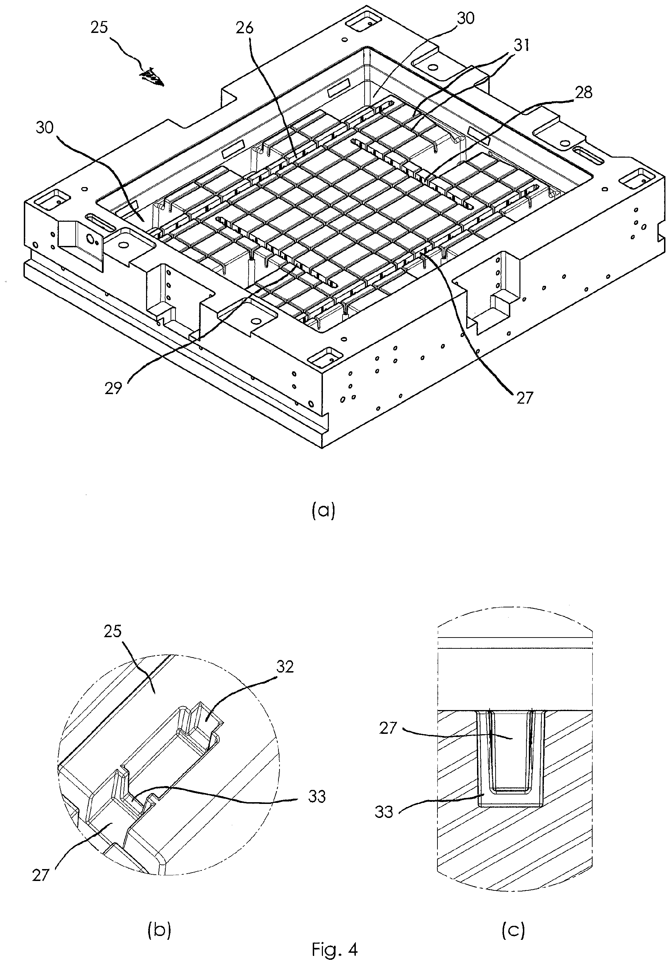

In Fig. 4 ist eine untere Pressform 25 gezeigt, mittels der sich die erfindungsgemäße Transportpalette 1 herstellen lässt. In der Pressform 25 sind vergleichsweise große Hohlräume 30 gebildet, die zur Bildung der Standfüße 15 dienen. Ferner sind verhältnismäßig schmale Nuten 31 gebildet, die zur Ausbildung der Rippen 34 vorgesehen sind. Darüber hinaus sind im Vergleich zu den Nuten 31 für die Rippenbildung breitere nutenförmige Aussparungen 26,27,28,29 gebildet, die zur Aufnahme der Verstärkungsmittel 3,4,5,6 vorgesehen sind. In den Aussparungen 26,27,28,29 sind, wie in Fig. 4b und c dargestellt ist, Vorsprünge 33 gebildet, die sowohl vom Boden als auch von den Seitenwänden der Aussparungen 26,27,28,29 vorstehen. Die Vorsprünge 33 und die Verstärkungsmittel 3,4,5,6 sind in ihren Formen derart aneinander angepasst, dass die Vorsprünge 33, wenn die Verstärkungsmittel 3,4,5,6 in die Aussparungen 26,27,28,29 eingelegt sind, vollständig an den Verstärkungsmitteln 3,4,5,6 anliegen oder zwischen den Vorsprüngen 33 und den Verstärkungsmitteln 3,4,5,6 lediglich so wenig Raum besteht, dass beim Pressen des Kunststoffs in den Bereichen lediglich ein dünner Kunststofffilm gebildet werden kann.

In gleicher Weise sind die Enden 32 der Aussparungen 26,27, 28,29, derart verengt, dass Endabschnitte 7,8,9,10 der Verstärkungsmittel 3,4,5,6, wenn die Verstärkungsmittel 3,4,5,6 in die Aussparungen 26,27,28,29 eingelegt sind, vollständig an den verengten Wänden der Aussparungen 26,27,28,29 anliegen oder zwischen den Endabschnitten 7,8,9,10 der Verstärkungsmittel 3,4,5,6 und den verengten Wänden lediglich ein derart kleiner Raum gebildet ist, dass sich dort beim Pressen lediglich ein dünner Kunststofffilm bilden kann.

Zur Herstellung der Transportpalette 1 werden die Verstärkungselemente 3,4,5,6 zunächst in die Pressform 25 eingelegt und anschließend zuvor erhitzter Kunststoff auf die Pressform 25 gelegt. Anschließend wird mittels eines oberen, hier nicht gezeigten Presswerkzeugs der Kunststoff derart verpresst, dass sich die in den Fig. 1 bis 3 gezeigte Transportpalette 1 ausbildet. Dabei wird der Kunststoff um die Verstärkungselemente 3,4,5,6 herum gepresst, so dass sich die Halterungen 11, 12 bilden.

Nach dem Pressen kühlt der Kunststoff ab und erfährt beim Schrumpfen eine wesentliche größere Größenänderung als die aus Stahl gebildeten Verstärkungsmittel 3,4,5,6.

Dadurch, dass die Verstärkungsmittel 3,4,5,6 im Bereich der Vorsprünge 33 und in den Endabschnitten 32 vollständig an der Pressform 25 anliegen, bleiben die Verstärkungsmittgel 3,4,5,6 beim Pressen abgesehen von ihren Seiten, die der Unterseite 35 des Bodens zugewandt sind, frei von Kunststoff bzw. es wird dort lediglich ein schmaler Kunststofffilm gebildet.

Wenn der Palettengrundkörper 2 nach dem Pressen sich unter Schrumpfung zusammenzieht, kann der Kunststoff des Palettengrundkörpers 2 in Längsrichtung der Verstärkungselemente 3,4,5,6 auf den Verstärkungselementen 3,4,5,6 gleiten, was zur Folge hat, das Spannungen zwischen dem Palettengrundkörper 2 und den Verstärkungselementen 3,4,5,6 vermieden werden. Gleichzeitig schrumpft der Kunststoff im Bereich der Halterungen 11, 12, so dass sie auf die Verstärkungselemente 3,4,5,6 aufschrumpfen und einen festen Reibschluss bilden.

Es versteht sich, dass in gleicher Weise der Palettengrundkörper 2 im Verhältnis zu den Verstärkungselementen 3,4,5,6 zum Ausgleich von unterschiedlichen Größenänderungen des Palettengrundkörpers 2 und der Verstärkungselemente 3,4,5,6 auch dann gleiten kann, wenn es aufgrund von Temperaturänderungen, die auf die fertig gestellte Transportbox wirken, Spannungen ausgeglichen werden können.

## Patentansprüche

1. Transporteinrichtung, die eine Transportpalette (1) umfasst, welche einen aus Kunststoff gebildeten Palettengrundkörper (2) aufweist, wobei der Palettengrundkörper (2) mit einem eine Längsrichtung aufweisenden Mittel (3, 4, 5, 6) zu seiner mechanischen Verstärkung versehen ist und das Verstärkungsmittel (3, 4, 5, 6) mit dem Palettengrundkörper (2) durch Verpressen des Kunststoffs reibschlüssig verbunden ist,
**dadurch gekennzeichnet,**
**dass** das Verstärkungsmittel (3, 4, 5, 6) an dem Palettengrundkörper (2) angeordnet ist derart, dass es in seiner Längsrichtung von Material, das den Palettengrundkörper (2) bildet und im Abstand von zumindest einem Ende (7,8,9,10) des Verstärkungsmittels (3,4,5,6) angeordnet ist, umgeben ist.

2. Transporteinrichtung nach Anspruch 1,
**dadurch gekennzeichnet,**
**dass** das Verstärkungsmittel (3,4,5,6) aus einem Werkstoff gebildet ist, der ein größeres Elastizitätsmodul als der Kunststoff aufweist, vorzugsweise aus einem metallischen Werkstoff, besonders bevorzugt aus Stahl.

3. Transporteinrichtung nach Anspruch 1 oder 2,
**dadurch gekennzeichnet,**
**dass** das Verstärkungsmittel (3,4,5,6) ein gerader Strangkörper ist und vorzugsweise durch ein Rohr, eine Stange oder ein Strangprofil gebildet ist.

4. Transporteinrichtung nach einem der Ansprüche 1 bis 3,
**dadurch gekennzeichnet,**
**dass** das Verstärkungsmittel (3,4,5,6) zum Ausgleich von Unterschieden in Wärmeausdehnungen und/oder-schrumpfungen des Palettengrundkörpers (2) und des Verstärkungsmittels (3,4,5,6) derart in der Transportpalette (1) angeordnet ist, dass sich der Palettengrundkörper (2) und das Verstärkungsmittel (3,4,5,6) bei einer Änderung der Größe der Transportpalette (1) relativ zueinander bewegen können.

5. Transporteinrichtung nach einem der Ansprüche 1 bis 4,
**dadurch gekennzeichnet,**
**dass** das Verstärkungsmittel (3,4,5,6) derart an dem Palettengrundkörper (2) angeordnet ist, dass es sich im Verhältnis zu dem Palettengrundkörper (2) lediglich in einer Raumrichtung, vorzugsweise lediglich in Längsrichtung des Verstärkungsmittels (3,4,5,6), bewegen kann.

6. Transporteinrichtung nach einem der Ansprüche 1 bis 5,
**dadurch gekennzeichnet,**
**dass** der Palettengrundkörper (2) derart geformt ist, dass er das Verstärkungsmittel (3,4,5,6) zumindest abschnittsweise hält, wobei vorzugsweise zumindest das Ende (7,8,9,10) des Verstärkungsmittels (3,4,5,6) im Palettengrundkörper (2) in einer Richtung, in der sich das Verstärkungsmittel und der Palettengrundkörperfrei relativ zueinander bewegen können, freiliegt, so dass es sich im Verhältnis zu dem Palettengrundkörper (2), vorzugsweise in Längsrichtung des Verstärkungsmittels (3,4,5,6), bewegen kann.

7. Transporteinrichtung nach einem der Ansprüche 1 bis 6,
**dadurch gekennzeichnet,**
**dass** der Palettengrundkörper (2) derart gebildet ist, dass das Verstärkungsmittel (3,4,5,6) mit einer seiner Längsseiten, vorzugsweise vollständig, an einem Boden, vorzugsweise einer Unterseite (35) des Bodens, des Palettengrundkörpers (2) anliegt.

8. Transporteinrichtung nach einem der Ansprüche 1 bis 7,
**dadurch gekennzeichnet,**
**dass** der Palettengrundkörper (2) zumindest eine, vorzugsweise am Boden des Palettengrundkörpers (3,4,5,6) befestigte, Halterung (11,12) für das Verstärkungsmittel (3,4,5,6) aufweist, die das Verstärkungsmittel (3,4,5,6) vorzugsweise umgreift.

9. Transporteinrichtung nach Anspruch 8,
**dadurch gekennzeichnet,**
**dass** für jedes Verstärkungsmittel (3,4,5,6) zumindest zwei der Halterungen (11,12) vorgesehen sind und ein Raum zwischen den Halterungen (11,12) abgesehen von dem Bereich, in dem das Verstärkungsmittel mit seiner Längsseite an dem Boden anliegt, frei von Material ist.

10. Transporteinrichtung nach einem der Ansprüche 1 bis 9,
**dadurch gekennzeichnet,**
**dass** die Transporteinrichtung einen Behälter bildet, der als Behälterboden die Transportpalette (1) und ferner Seitenwände (16, 17, 18, 19), die sich auf der Transportpalette (1) anordnen lassen, sowie vorzugsweise einen auf die Seitenwände (16, 17, 18, 19) aufsetzbaren Deckel (20) aufweist, wobei die Seitenwände (16, 17, 18, 19) an ihren senkrechten Kanten vorzugsweise verbunden und zusammenfaltbar sind.

11. Verfahren zur Herstellung einer Transporteinrichtung, bei dem zur Ausbildung einer Transportpalette (1) der Transporteinrichtung Kunststoff in eine Pressform (25) gegeben wird und die Transportpalette (1) durch Pressen des Kunststoffs geformt wird, wobei in die Pressform (25) vor Eingabe des Kunststoffs ein eine Längsrichtung aufweisendes Mittel (3,4,5,6) zur Verstärkung der Transportpalette (1) eingelegt wird und der Kunststoff unter Ausbildung einer Verbindung mit dem Verstärkungsmittel (3,4,5,6) zu der Transportpalette (1) geformt wird, wobei das Verstärkungsmittel (3, 4, 5, 6) mit einem Palettengrundkörper (2) durch Verpressen des Kunststoffs reibschlüssig verbunden wird,
wobei das Verstärkungsmittel (3, 4, 5, 6) in seiner Längsrichtung von Material, das den Palettengrundkörper (2) bildet, umgeben wird, und
wobei der Kunststoff lediglich derart abschnittsweise mit dem Verstärkungsmittel (3,4,5,6) verbunden wird, dass zumindest ein Ende (7,8,9,10) des Verstärkungsmittels (3,4,5,6) vom Kunststoff frei bleibt oder an dem Ende (7,8,9,10) eine derart geringe Menge des Kunststoffs angeordnet wird, dass der am Ende angeordnete Kunststoff bei einer Bewegung des Verstärkungsmittels (3,4,5,6) relativ zum Palettengrundkörper (2) durch das Verstärkungsmittel (3,4,5,6) zumindest abschnittsweise vom Palettengrundkörper (2) getrennt werden kann.

12. Verfahren nach Anspruch 11,
**dadurch gekennzeichnet,**
**dass** der Palettengrundkörper (2) derart mit dem Verstärkungsmittel (3,4,5,6) verbunden wird, dass er sich bei Größenveränderung aufgrund von Schrumpf oder einer Temperaturänderung im Verhältnis zu dem Verstärkungsmittel (3,4,5,6) bewegen kann.

13. Vorrichtung zur Herstellung einer Transporteinrichtung, insbesondere einer Transportpalette, die eine Pressform (25) zum Pressen von Kunststoff umfasst,
wobei die Pressform (25) zumindest einen Abschnitt zur Aufnahme eines eine Längsrichtung aufweisenden Mittels zur Verstärkung der Transporteinrichtung umfasst, das beim Pressen mit dem Kunststoff zu verbinden ist,
wobei die Pressform (25) in ihrer Form derart an das Verstärkungsmittel angepasst ist, dass das Verstärkungsmittel in seiner Längsrichtung von Material, das einen Palettengrundkörper (2) bildet, umgeben ist und die Pressform (25) zumindest an einem Ende des Verstärkungsmittels anliegt, sodass beim Pressen zumindest ein Ende des Verstärkungsmittels frei von Kunststoff bleibt oder an dem Ende lediglich ein dünner Kunststofffilm gebildet wird.

14. Vorrichtung nach Anspruch 13,
**dadurch gekennzeichnet,**
**dass** der Aufnahmeabschnitt durch eine in der Pressform (25) gebildete, vorzugsweise nutenförmige, Aussparung (26,27,28,29) gebildet ist, in die sich das Verstärkungsmittel einlegen lässt.

15. Vorrichtung nach Anspruch 13 oder 14,
**dadurch gekennzeichnet,**
**dass** in dem Aufnahmeabschnitt zur Bildung von Auflageflächen für das Verstärkungsmittel zumindest zwei Stege als Auflagefläche gebildet sind, wobei die Auflagefläche vorzugsweise derart geformt ist, dass das Verstärkungsmittel zumindest abschnittsweise vollständig an ihr anliegt, um zu vermeiden, dass der Kunststoff beim Pressen im Bereich der Stege bis an das Verstärkungsmittel herangelangt.

## Claims

1. Transport device comprising a transport pallet (1), which has a pallet main body (2) made of plastic, wherein the pallet main body (2) is provided with a means (3, 4, 5, 6) for mechanical reinforcement of the pallet main body (2) having a longitudinal direction and the reinforcement means (3, 4, 5, 6) is connected to the pallet main body (2) in a frictional engagement by compressing the plastic,
**characterized in that**
the reinforcement means (3, 4, 5, 6) is arranged at the pallet main body (2) in such a way that it is surrounded in its longitudinal direction by material which forms the pallet main body (2) and which is spaced apart from at least one end (7, 8, 9, 10) of the reinforcement means (3, 4, 5, 6).

2. Transport device according to Claim 1,
**characterized in that**
the reinforcement means (3, 4, 5, 6) is made of a material which has a higher modulus of elasticity than the plastic, preferably of a metallic material, particularly preferably of steel.

3. Transport device according to Claim 1 or 2,
**characterized in that**
the reinforcement means (3, 4, 5, 6) is a straight extruded body and is preferably formed by a tube, a rod or an extruded profile.

4. Transport device according to one of Claims 1 to 3,
**characterized in that**,
to compensate for differences in heat expansion and/or shrinkage of the pallet main body (2) and the reinforcement means (3, 4, 5, 6), the reinforcement means (3, 4, 5, 6) are arranged in the transport pallet (1) in such a way that the pallet main body (2) and the reinforcement means (3, 4, 5, 6) can move relative to one another in the event of a change in the size of the transport pallet (1).

5. Transport device according to one of Claims 1 to 4,
**characterized in that**
the reinforcement means (3, 4, 5, 6) is arranged at the pallet main body (2) in such a way that it can move in relation to the pallet main body (2) only in one spatial direction, preferably only in the longitudinal direction of the reinforcement means (3, 4, 5, 6).

6. Transport device according to one of Claims 1 to 5,
**characterized in that**
the pallet main body (2) is shaped in such a way that it holds the reinforcement means (3, 4, 5, 6) at least in sections, wherein preferably at least the end (7, 8, 9, 10) of the reinforcement means (3, 4, 5, 6) in the pallet main body (2) is exposed in a direction in which the reinforcement means and the pallet main body can move freely in relation to one another, with the result that said end can move in relation to the pallet main body (2), preferably in the longitudinal direction of the reinforcement means (3, 4, 5, 6).

7. Transport device according to one of Claims 1 to 6,
**characterized in that**
the pallet main body (2) is formed in such a way that the reinforcement means (3, 4, 5, 6) by way of one of its longitudinal sides bears preferably completely against a base, preferably a bottom side (35) of the base, of the pallet main body (2).

8. Transport device according to one of Claims 1 to 7,
**characterized in that**
the pallet main body (2) has at least one holder (11, 12) for the reinforcement means (3, 4, 5, 6), the holder preferably being fastened to the base of the pallet main body (3, 4, 5, 6) and preferably engaging around the reinforcement means (3, 4, 5, 6).

9. Transport device according to Claim 8,
**characterized in that**
at least two of the holders (11, 12) are provided for each reinforcement means (3, 4, 5, 6), and a space between the holders (11, 12), except for the region in which the reinforcement means by way of its longitudinal side bears against the base, is free of material.

10. Transport device according to one of Claims 1 to 9,
**characterized in that**
the transport device forms a container which has the transport pallet (1) as container base, and also side walls (16, 17, 18, 19) which can be arranged on the transport pallet (1), and also preferably a cover (20) that can be placed on the side walls (16, 17, 18, 19), wherein the side walls (16, 17, 18, 19) are preferably connected and can be collapsed at their perpendicular edges.

11. Method for producing a transport device, in the course of which, to form a transport pallet (1) of the transport device, plastic is inserted into a pressing mould (25) and the transport pallet (1) is shaped by pressing the plastic, wherein, before the plastic is introduced, a means (3, 4, 5, 6) for reinforcing the transport pallet (1), the means having a longitudinal direction, is placed into the pressing mould (25) and the plastic is shaped, with formation of a connection to the reinforcement means (3, 4, 5, 6), into the transport pallet (1), wherein the reinforcement means (3, 4, 5, 6) is connected to the pallet main body (2) in a frictional engagement by compressing the plastic,
wherein the reinforcement means (3, 4, 5, 6) is surrounded in its longitudinal direction by material which forms the pallet main body (2), and
wherein the plastic is connected to the reinforcement means (3, 4, 5, 6) only in sections in such a way that at least one end (7, 8, 9, 10) of the reinforcement means (3, 4, 5, 6) remains free of plastic, or such a small amount of plastic is positioned at the end (7, 8, 9, 10) that the plastic positioned at the end can be separated from the pallet main body (2) at least in sections by the reinforcement means (3, 4, 5, 6) in the event of a movement of the reinforcement means (3, 4, 5, 6) relative to the pallet main body (2).

12. Method according to Claim 11,
**characterized in that**
the pallet main body (2) is connected to the reinforcement means (3, 4, 5, 6) in such a way that it can move in relation to the reinforcement means (3, 4, 5, 6) in the event of a change in size caused by shrinkage or a change in temperature.

13. Apparatus for producing a transport device, in particular a transport pallet, which comprises a pressing mould (25) for pressing plastic, wherein the pressing mould (25) comprises at least one portion for receiving a means which has a longitudinal direction, is intended to reinforce the transport device and is to be connected to the plastic during the pressing operation,
wherein the shape of the pressing mould (25) is adapted to the reinforcement means in such a way that the reinforcement means in its longitudinal direction is surrounded by material which forms a pallet main body (2) and the pressing mould (25) bears at least against one end of the reinforcement means, with the result that, during the pressing operation, at least one end of the reinforcement means remains free of plastic, or only a thin film of plastic is formed at the end.

14. Apparatus according to Claim 13,
**characterized in that**
the receiving portion is formed by a, preferably groove-shaped, cutout (26, 27, 28, 29), which is formed in the pressing mould (25) and into which the reinforcement means can be placed.

15. Apparatus according to Claim 13 or 14,
**characterized in that**
at least two webs in the form of a support surface are formed in the receiving portion to form support surfaces for the reinforcement means, wherein the support surface is preferably shaped in such a way that the reinforcement means bears against it completely at least in sections to avoid the plastic reaching as far as the reinforcement means in the region of the webs during the pressing operation.

## Revendications

1. Dispositif de transport qui comprend une palette de transport (1) qui présente un corps de base de palette (2) formé à partir de matériau synthétique, le corps de base de palette (2) étant pourvu d'un moyen (3, 4, 5, 6), présentant une direction longitudinale, pour son renforcement mécanique et le moyen de renforcement (3, 4, 5, 6) étant relié par friction au corps de base de palette (2) par pressage du matériau synthétique, **caractérisé en ce que** le moyen de renforcement (3, 4, 5, 6) est agencé au niveau du corps de base de palette (2) de manière telle qu'il est entouré dans sa direction longitudinale par du matériau qui forme le corps de base de palette (2) et qui est agencé à une certaine distance d'au moins une extrémité (7, 8, 9, 10) du moyen de renforcement (3, 4, 5, 6).

2. Dispositif de transport selon la revendication 1, **caractérisé en ce que** le moyen de renforcement (3, 4, 5, 6) est formé à partir d'un matériau qui présente un module d'élasticité supérieur à celui du matériau synthétique, de préférence à partir d'un matériau métallique, de manière particulièrement préférée à partir d'acier.

3. Dispositif de transport selon la revendication 1 ou 2, **caractérisé en ce que** le moyen de renforcement (3, 4, 5, 6) est un corps extrudé droit et de préférence formé par un tube, une tige ou un profilé extrudé.

4. Dispositif de transport selon l'une quelconque des revendications 1 à 3, **caractérisé en ce que** le moyen de renforcement (3, 4, 5, 6), pour compenser des différences de dilatations et/ou de retraits thermiques du corps de base de palette (2) et du moyen de renforcement (3, 4, 5, 6), est agencé dans la palette de transport (1) de manière telle que le corps de base de palette (2) et le moyen de renforcement (3, 4, 5, 6) peuvent bouger l'un par rapport à l'autre lors d'une modification de la taille de la palette de transport (1).

5. Dispositif de transport selon l'une quelconque des revendications 1 à 4, **caractérisé en ce que** le moyen de renforcement (3, 4, 5, 6) est agencé au niveau du corps de base de palette (2) de manière telle qu'il peut bouger uniquement dans une direction spatiale par rapport au corps de base de palette (2), de préférence uniquement dans la direction longitudinale du moyen de renforcement (3, 4, 5, 6).

6. Dispositif de transport selon l'une quelconque des revendications 1 à 5, **caractérisé en ce que** le corps de base de palette (2) est façonné de manière telle qu'il retient le moyen de renforcement (3, 4, 5, 6) au moins par sections, de préférence au moins l'extrémité (7, 8, 9, 10) du moyen de renforcement (3, 4, 5, 6) étant libre dans le corps de base de palette (2) dans une direction dans laquelle le moyen de renforcement et le corps de base de palette peuvent bouger librement l'un par rapport à l'autre, de telle sorte qu'il peut bouger par rapport au corps de base de palette (2), de préférence dans la direction longitudinale du moyen de renforcement (3, 4, 5, 6).

7. Dispositif de transport selon l'une quelconque des revendications 1 à 6, **caractérisé en ce que** le corps de base de palette (2) est formé de manière telle que le moyen de renforcement (3, 4, 5, 6) se place, avec un de ses côtés longitudinaux, de préférence complètement, contre un fond, de préférence contre une face inférieure (35) du fond, du corps de base de palette (2).

8. Dispositif de transport selon l'une quelconque des revendications 1 à 7, **caractérisé en ce que** le corps de base de palette (2) présente au moins un dispositif de fixation (11, 12), de préférence fixé au niveau du fond du corps de base de palette (3, 4, 5, 6), pour le moyen de renforcement (3, 4, 5, 6), lequel dispositif de fixation entoure de préférence le moyen de renforcement (3, 4, 5, 6).

9. Dispositif de transport selon la revendication 8, **caractérisé en ce que**, pour chaque moyen de renforcement (3, 4, 5, 6), au moins deux des dispositifs de fixation (11, 12) sont prévus et, en dehors de la zone dans laquelle le moyen de renforcement se place avec son côté longitudinal contre le fond, un espace entre les dispositifs de fixation (11, 12) est exempt de matériau.

10. Dispositif de transport selon l'une quelconque des revendications 1 à 9, **caractérisé en ce que** le dispositif de transport forme un récipient, qui présente, comme fond de récipient, la palette de transport (1) et en outre des parois latérales (16, 17, 18, 19), qui peuvent être agencées sur la palette de transport (1), ainsi que de préférence un couvercle (20) pouvant être placé sur les parois latérales (16, 17, 18, 19), les parois latérales (16, 17, 18, 19) étant de préférence reliées à leurs bords verticaux et pouvant être repliées.

11. Procédé pour la fabrication d'un dispositif de transport, dans lequel, pour la réalisation d'une palette de transport (1) du dispositif de transport, un matériau synthétique est introduit dans un moule (25) et la palette de transport (1) est façonnée par pressage du matériau synthétique, un moyen (3, 4, 5, 6), présentant une direction longitudinale, destiné à renforcer la palette de transport (1) étant placé dans le moule (25) avant l'introduction du matériau synthétique et le matériau synthétique étant façonné en la palette de transport (1) avec formation d'une liaison avec le moyen de renforcement (3, 4, 5, 6), le moyen de renforcement (3, 4, 5, 6) étant relié avec une liaison par friction à un corps de base de palette (2) par pressage du matériau synthétique, le moyen de renforcement (3, 4, 5, 6) étant entouré, dans sa direction longitudinale, par du matériau qui forme le corps de base de palette (2) et le matériau synthétique étant relié uniquement par sections au moyen de renforcement (3, 4, 5, 6) de manière telle qu'au moins une extrémité (7, 8, 9, 10) du moyen de renforcement (3, 4, 5, 6) reste exempte de matériau synthétique ou une quantité de matériau synthétique tellement petite étant agencée au niveau de l'extrémité (7, 8, 9, 10) que le matériau synthétique agencé en l'extrémité peut être séparé au moins par sections du corps de base de palette (2) par un mouvement du moyen de renforcement (3, 4, 5, 6) par rapport au corps de base de palette (2) par le moyen de renforcement (3, 4, 5, 6).

12. Procédé selon la revendication 11, **caractérisé en ce que** le corps de base de palette (2) est relié au moyen de renforcement (3, 4, 5, 6) de manière telle qu'il peut bouger par rapport au moyen de renforcement (3, 4, 5, 6) lors d'une modification de taille en raison d'un retrait ou d'une modification de température.

13. Dispositif pour la fabrication d'un dispositif de transport, en particulier d'une palette de transport, qui comprend un moule (25) pour le pressage de matériau synthétique, le moule (25) comprenant au moins une section destinée à recevoir un moyen, présentant une direction longitudinale, pour le renforcement du dispositif de transport, lequel moyen doit être relié lors du pressage au matériau synthétique, la forme du moule (25) étant adaptée au moyen de renforcement de manière telle que le moyen de renforcement est entouré, dans sa direction longitudinale, par du matériau qui forme un corps de base de palette (2) et le moule (25) se plaçant contre au moins une extrémité du moyen de renforcement, de telle sorte que lors du pressage, au moins une extrémité du moyen de renforcement reste exempte de matériau synthétique ou que seul un film de matériau synthétique mince se forme en l'extrémité.

14. Dispositif selon la revendication 13, **caractérisé en ce que** la section destinée à recevoir le moyen de renforcement est formée par un évidement (26, 27, 28, 29), de préférence sous forme de rainure, formé dans le moule (25), dans lequel le moyen de renforcement peut être inséré.

15. Dispositif selon la revendication 13 ou 14, **caractérisé en ce qu'**au moins deux âmes sont formées en tant que surface d'appui dans la section de réception, destinées à la formation de surfaces d'appui pour le moyen de renforcement, la surface d'appui étant de préférence façonnée de manière telle que le moyen de renforcement se place au moins par sections complètement contre celle-ci, afin éviter que le matériau synthétique arrive jusqu'au niveau du moyen de renforcement lors du pressage dans la zone des âmes.
